# EUROPEAN PATENT APPLICATION

(11) **EP 2 037 133 A1**
(43) Date of publication of application: **18.03.2009**
(21) Application number: 07790453.0
(22) Date of filing: 29.06.2007
(51) Int. Cl.: F16C 11/10, F16C 11/04, F16F 1/12, H04M 1/02

(54) **HINGE DEVICE AND ELECTRONIC APPARATUS USING HINGE DEVICE**

(30) Priority: 30.06.2006 JP 2006182087
(71) Applicant: Strawberry Corporation, Tokyo 171-0021 (JP)
(72) Inventor: HAYASHI, Yoshitaka, Tokyo 171-0021 (JP)
(74) Representative: HOFFMANN EITLE
(86) International application number: PCT/JP2007/063511
(87) International publication number: WO 2008/001951

(57) **Abstract**

The present invention is a hinge device installed between a first member 1 and a second member 2, which are folding opening/closing members; including: a first installation body 3 having a cam 4 and pivots together with the first member 1; a tubular second installation body 6 which pivots together with the second member 2; a cam engaging member 5 which is engaged with the cam 4; and a counter-contraction spring 7 which pressingly biases the cam engaging member 5, the first installation body 3 is arranged within the tubular second installation body 6 in a rotatable and slidable manner; the second installation body 6 includes an opening 8 having a slit 9, and the opening 8 is expandable by provision of the slit 9; and when the counter-contraction spring 7 is installed, under the condition that the expandable opening 8 is expanded from an initial diameter and the counter-contraction spring 7 is then installed, the counter-contraction spring 7 is locked in the opening 8 in a non-disengeable manner at the position of the initial diameter after returning from the expanded diameter. The present invention also is an electronic apparatus using the hinge device.

## Description

### Field of the Invention

The present invention relates to a hinge device and an electronic apparatus using the hinge device.

### Description of the Related Art

A hinge device has been used for a folding cellular phone in which a main body section provided with an operating section and an overlapping section provided with a display section are pivotally connected, allowing them to pivot and open from a closed state in which they are overlapped with each other.

A hinge device of this type has been proposed (for example, Japanese Patent Application Laid-Open Publication No. 2003-184861). The hinge device is provided with a first installation body which pivots together with the overlapping section of the folding cellular phone and a second installation body which pivots together with the main body section. A shaft borne by a bearing provided in the second installation body is provided in the first installation body. The first installation body is provided with a cam, and a cam engaging member which is engaged with the cam is provided in the second installation body. When the cam and the cam engaging member are in an engaged state, the overlapping section and the main body section of the folding cellular phone are pivotally locked in the engaged state. The cam engaging member is slidably provided in the shaft so that it moves in a non-engageable direction. In addition, an engagement biasing mechanism (for example, a coil spring) is provided. Along with the relative pivoting movement of the overlapping section and the main body section, the cam and the cam engaging member are engaged in a drop-in manner via the engagement biasing imparted by the engagement biasing mechanism, thereby generating a relative pivoting movement biasing force.

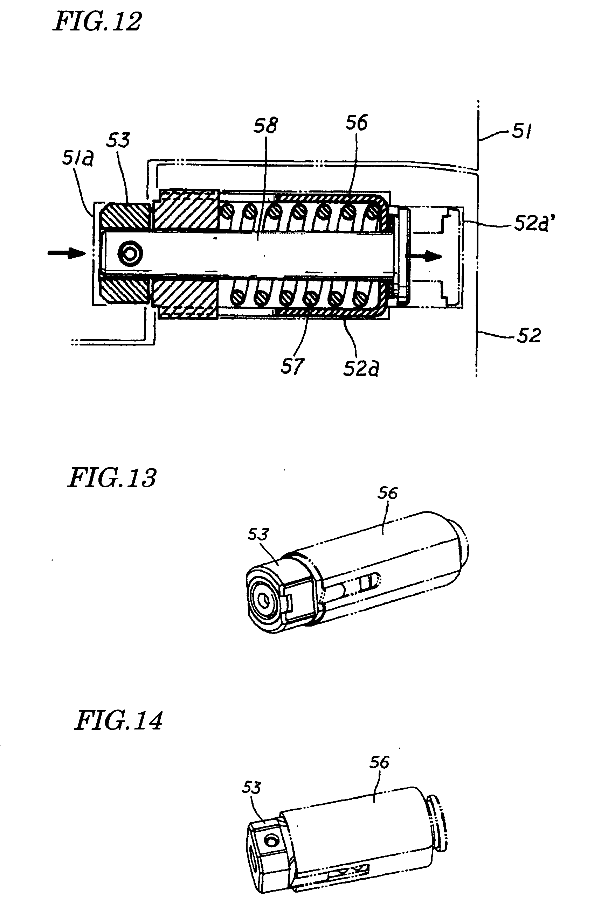

In the assembly of parts in the hinge device of this particular type, as shown in Figs. 12 to 14, caulking is performed at the end portion of a shaft 58, leading to poor productivity and hence poor mass production. In addition, the shaft 58 is processed during assembly, which may cause poor assembly balance.

In the hinge device of the conventional type shown herein, during assembly for pivotally connecting an overlapping section 51 and a main body section 52, under the condition that a second installation body 56 is arranged in a recessed portion 52a provided in the main body section 52, the shaft 58 is moved against the bias of a counter-contraction spring 57 in order to allow a first installation body 53 provided on the end of the shaft 58 to sink into the second installation body 56, and the first installation body 53 is fitted into a recessed portion 51a provided in the overlapping section 51 via the bias imparted by the counter-contraction spring 57, thereby completing the assembly of the hinge device.

Such a configuration, however, owing to its structure in which the shaft 58 is moved as described above, requires the provision of a recessed portion 52a' for allowing the shaft 58 protruding from the second installation body 56, to escape thereinto, and this leads to an increase in production costs.

The applicant of the present invention has carried out further research and development on this type of hinge device and has developed a novel hinge device which has unique features and an electronic apparatus using the hinge device.

### Disclosure of the Invention

According to one aspect of the present invention, there is provided a hinge device installed between a first member 1 and a second member 2, which are folding opening/closing members, comprising:
a first installation body 3 which comprises a cam 4 and pivots together with the first member 1 in conjunction with the first member 1;
a tubular second installation body 6 which pivots together with the second member 2 in conjunction with the second member 2;
a cam engaging member 5 which is engaged with the cam 4 of the first installation body 3; and
a counter-contraction spring 7 which pressingly biases the cam engaging member 5 in the direction of the cam 4, wherein
the first installation body 3 is provided within the tubular second installation body 6 in a rotatable and slidable manner;
the second installation body 6 comprises an opening 8 having a slit 9 on the other end thereof, and the opening 8 is expandable by provision of the slit 9;
the cam engaging member 5 is provided within the second installation body 6 in a slidable and non-rotatable manner;
the first installation body 3, the cam engaging member 5, and the counter-contraction spring 7 are installed within the second installation body 6; and
when the counter-contraction spring 7 is installed, under the condition that the expandable opening 8 is expanded from an initial diameter and the counter-contraction spring 7 is then installed, the counter-contraction spring 7 is locked in the opening 8 in a non-disengeable manner at the initial diameter position after returning from the expanded diameter.

According to another aspect of the present invention there is provided the hinge device, as described above, wherein a step 16b is formed at the rear of the opening 8, a rear portion 7a of the counter-contraction spring 7 is formed which is larger than the other portions of the counter-contraction spring 7, and the rear portion 7a of the counter-contraction spring 7 is engaged with the step 16b of the opening 8, thereby allowing the counter-contraction spring 7 to be locked in the opening 8 in a non-engeable manner.

According to another aspect of the present invention there is provided the hinge device, as described above, wherein the opening 8 is expanded, a separate spring support 10 for supporting the rear of the counter-contraction spring 7 is installed, and the spring support 10 is engaged with the opening 8, thereby allowing the counter-contraction spring 7 to be locked in the opening 8 in a non-disengeable manner.

According to another aspect of the present invention, there is provided the hinge device, as described above, wherein a plurality of slits 9 are provided at opposing positions on the peripheral surface of the second installation body 6.

According to another aspect of the present invention, there is provided the hinge device, as described above, wherein the cam engagement member 5 is provided with a protruding slide portion 5a, and a guide groove 13 is provided on the inner surface of the second installation body 6 for guiding the protruding slide portion 5a of the cam engaging member 5.

According to another aspect of the present invention, there is provided the hinge device, as described above, wherein the second installation body 6 is formed of an appropriate synthetic resin made member.

According to yet another aspect of the present invention, there is provided a hinge device installed between a first member 1 and a second member 2, which are folding opening/closing members, comprising:
a first installation body 3 which comprises a cam 4 and pivots together with the first member 1 in conjunction with the first member 1;
a tubular second installation body 6 which pivots together with the second member 2 in conjunction with the second member 2;
a cam engaging member 5 which is engaged with the cam 4 of the first installation body 3; and
a counter-contraction spring 7 which pressingly biases the cam engaging member 5 in the direction of the cam 4, wherein
the first installation body 3 is provided within the tubular second installation body 6 in a rotatable and slidable manner;
the second installation body 6 is provided with an opening 8 on the other end thereof;
the cam engaging member 5 is provided within the second installation body 6 in a slidable and non-rotatable manner;
the first installation body 3, the cam engaging member 5, and the counter-contraction spring 7 are installed within the second installation body 6; and
a rear portion 7a of the counter-contraction spring 7 is formed which is larger than the other portions of the counter-contraction spring 7, a female screw 16c which matches with the diameter of the rear portion 7a of the counter-contraction spring 7 is formed at the rear of the opening 8 of the second installation body 6, and
the rear portion 7a of the counter-contraction spring 7 is threadably engaged with the female screw 16c of the opening 8, thereby allowing the counter-contraction spring 7 to be locked in the opening 8 in a non-disengeable manner.

According to yet another aspect of the present invention, there is provided an electronic apparatus which is configured by installing the above-described hinge device between a main body section of an apparatus in which a first member 1 of folding opening/closing members is provided with a control section 14 and an apparatus overlapping section in which a second member 2 of the folding opening/closing members is provided with a display section 15.

### Brief Description of the Drawings

Fig. 1 is a schematic view illustrating the state of use of one embodiment of the present invention.
Fig. 2 is a perspective view showing one embodiment of the present invention.

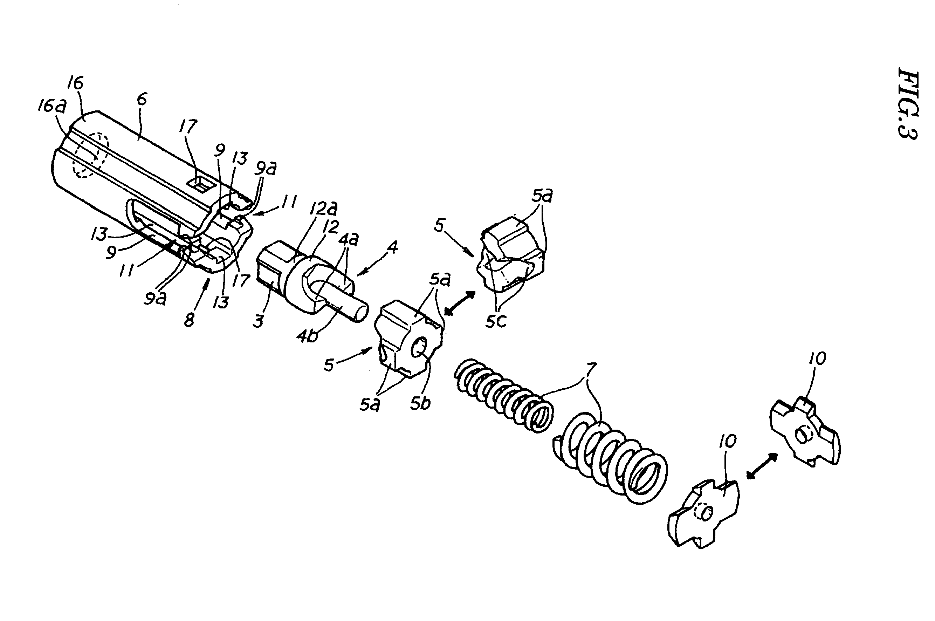

Fig. 3 is an exploded perspective view of one embodiment of the present invention.
Fig. 4 is a schematic view illustrating the operation of the principal part of one embodiment of the present invention.
Fig. 5 is a cross-sectional view showing one embodiment of the present invention.

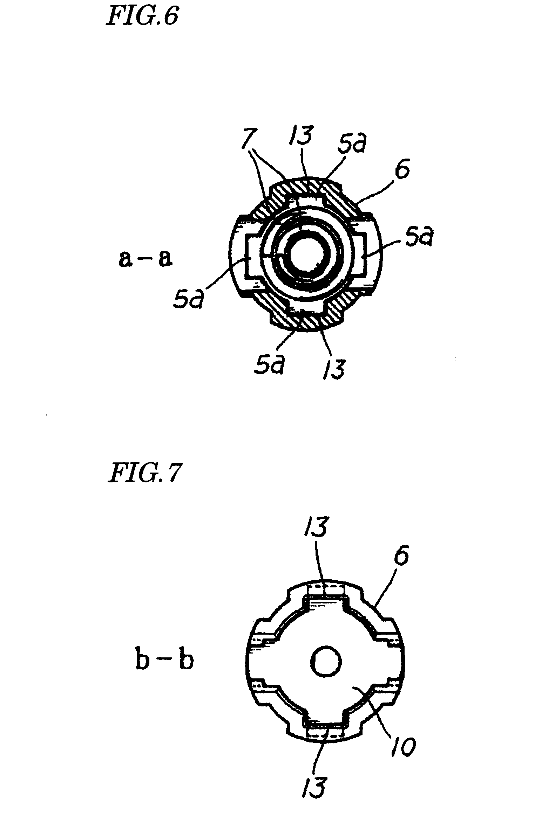

Fig. 6 is a sectional view along the line a-a of Fig. 5.
Fig. 7 is a sectional view along the line b-b of Fig. 5.
Fig. 8 is a schematic view illustrating the operation of the principal part of one embodiment of the present invention.
Fig. 9 is another schematic view illustrating the operation of the principal part of one embodiment of the present invention.
Fig. 10 is a cross-sectional view showing another embodiment of the present invention.
Fig. 11 is a cross-sectional view showing another embodiment of the present invention.
Fig. 12 is a schematic view illustrating the operation of the principal part of a prior art embodiment.
Fig. 13 is a perspective view showing a prior art embodiment.
Fig. 14 is another perspective view showing a prior art embodiment.

### Description of the Preferred Embodiments

Specific embodiments of the present invention will now be described with reference to the attached drawings.

One embodiment of the present invention is a hinge device installed between a first member 1 and a second member 2, which are folding opening/closing members.

The hinge device is provided with a cam 4 in a pivot section 12 and is provided with a first installation body 3 which pivots together with the first member 1 in conjunction with the first member 1, a tubular second installation body 6 which pivots together with the second member 2 in conjunction with the second member 2, a cam engaging member 5 which is engaged with the cam 4 of the first installation body 3, and a counter-contraction spring 7 which pressingly biases the cam engaging member 5 in the direction of the cam 4.

With this configuration, along with the relative pivoting movement of the first member 1 and the second member 2, the cam 4 and the cam engaging member 5 are engaged in a drop-in manner via the engaging bias imparted by the counter-contraction spring 7, thereby generating a relative pivoting movement biasing force.

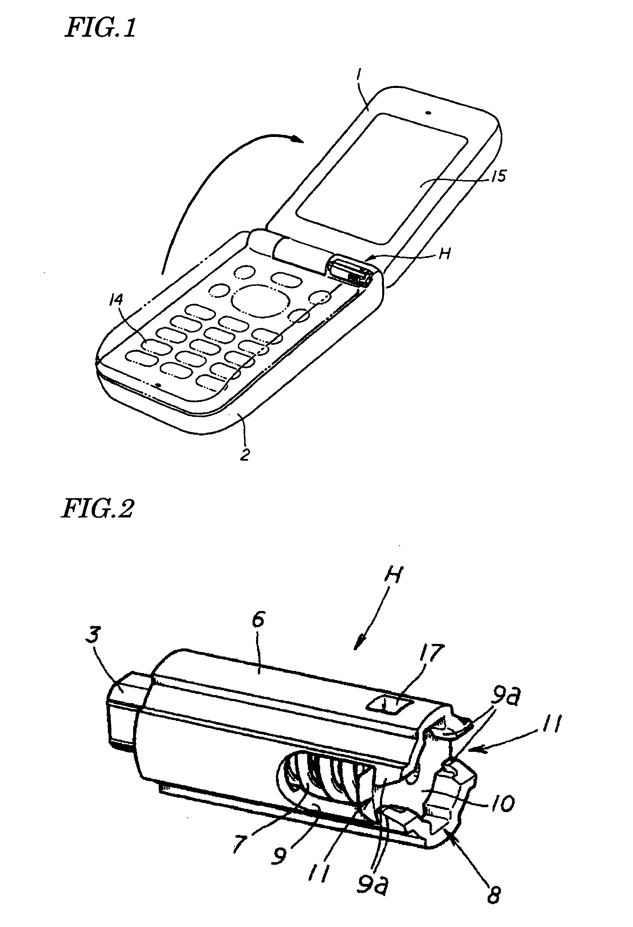

Specifically, the folding opening/closing members include, as shown in Fig. 1, a resin overlapping section provided with a display section 15 as the first member 1 and a resin main body section provided with a control section 14 as the second member 2. The hinge device H of the present embodiment is applied to the pivotally connected structure which can be switched between the closed state in which the overlapping section is overlapped on the main body section and the open state (the conversation state) in which the overlapping section has pivoted to, for example, 120 degrees.

In the present embodiment, the base of the overlapping section (the first member 1) is provided with a connecting recessed portion 1a, while the base of the main body section (the second member 2) is also provided with a connecting recessed portion 2a, which is adjacent to the connecting recessed portion 1a in communication therewith. The hinge device H of the present embodiment, being configured as a shaft-shaped part, is installed in the connecting recessed portions 1a and 2a.

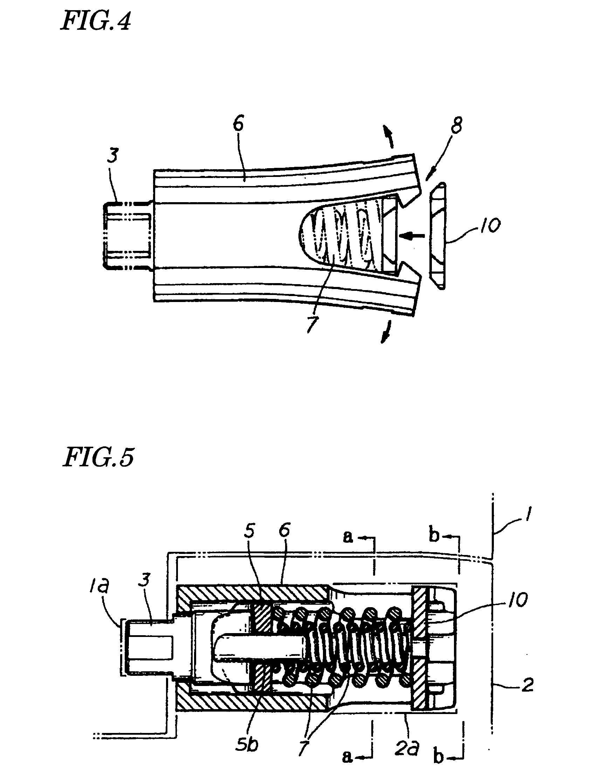

More specifically, as shown in Fig. 5, in the main body section (the second member 2), the second installation body 6 as a tubular body (a casing) having a non-rotatable shape with respect to the connecting recessed portion 2a is inserted into the connecting recessed portion 2a of the main body section and is fixed thereto in a non-rotatable manner.

The second installation body 6 is a housing structure which can house the below-described cam engaging member 5 in a slidable manner and is integrally molded from an appropriate synthetic resin made member.

In the present embodiment, a closed section 16 having a hole 16a at the center thereof is provided at one end of the second installation body 6. The hole 16a functions as a bearing for bearing a shaft 12a of the pivot section 12 provided in the first installation body 3.

In addition, the second installation body 6 is provided with the synthetic resin made cam engaging member 5 (a sliding body). The cam engaging member 5 is formed to have a nearly-circular shape of cross section and is provided with protruding slide portions 5a at four 90-degree-spaced places on its peripheral surface.

The second installation body 6 is formed with guide grooves 13 in the longitudinal direction. The protruding slide portions 5a are guided by the guide grooves 13, thereby allowing the cam engaging member 5 to be provided in the second installation body 6 in a slidable and non-rotatable manner.

The cam engaging member 5 is formed with a hole 5b at its central position through which a shaft 4b of the cam 4 passes. In addition, recessed portions 5c, 5c are provided at opposing positions on the end of the cam engaging member 5.

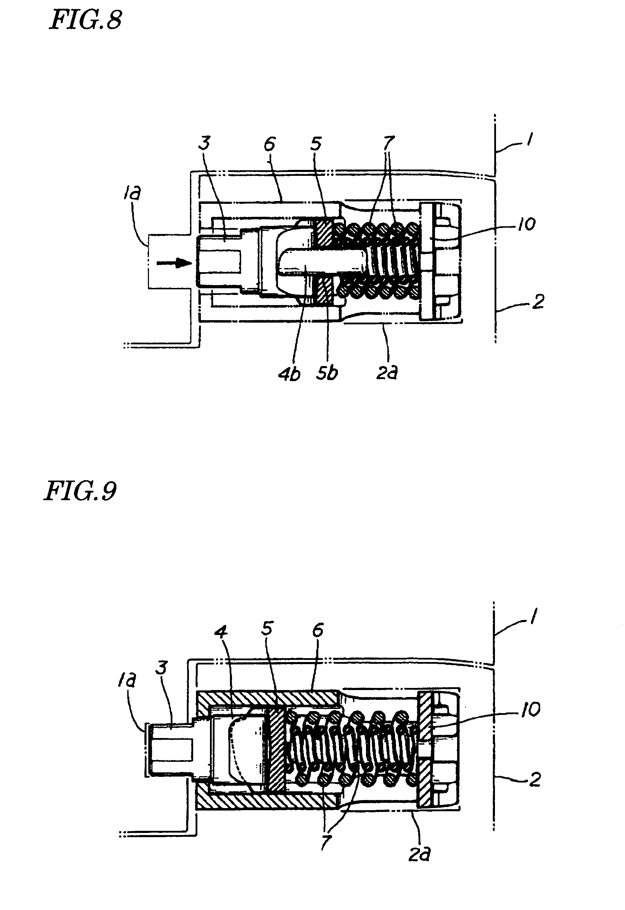

Since the cam engaging member 5 is guided to slide along the inner surface of the second installation body 6 with high precision, the cam 4 may eliminate the need for shaft 4b, as shown in Fig. 9. Elimination of the shaft can prevent the likelihood of poor assembly balance caused by the shaft, thereby achieving a high quality result.

The cam engaging member 5 which slides within the second installation body 6 is thus slidable in the counter-engagement direction with respect to the cam 4.

In addition, the second installation body 6 is provided with a pair of slits 9 which open toward an opening 8 on the other end at opposing positions in the longitudinal direction on the peripheral surface thereof. The slits 9 provide the portions surrounding the slits 9 with flexibility, thereby making the opening 8 expandable.

In the present invention, the first installation body 3, the cam engaging member 5, and the counter-contraction spring 7 are installed within the second installation body 6. In the hinge device, when the counter-contraction spring 7 is installed, the expandable opening 8 is expanded from its initial diameter, and after the counter-contraction spring 7 is installed, the counter-contraction spring 7 is locked in the opening 8 in a non-disengeable manner at the initial diameter position after returning from the expanded diameter.

In the present embodiment, a separate spring support 10 is used for supporting the rear portion of the counter-contraction spring 7. In the hinge device of the present embodiment, the opening 8 is expanded to install the spring support 10, and the spring support 10 is engaged with the opening 8, thereby allowing the counter-contraction spring 7 to be locked in the opening 8 in a non-disengeable manner.

The non-disengeable engagement of the counter-contraction spring 7 is achieved by allowing the right and left ends of the spring support 10 to be fitted into the right and left slits 9. In the present embodiment, the second installation body 6 is provided with spring support engaging sections 11 that allow the spring support 10, press fitted within the opening 8, to be engaged in a non-disengeable manner.

The spring support engaging sections 11 consist of hook-shaped portions 9a which are formed at opposing positions on the tip of the slits 9 and through holes 17 which are formed at opposing positions on the peripheral surface of the second installation body 6.

When the opening 8 is expanded to allow the spring support 10 to be installed in the opening 8, and the expanded opening 8 is then returned to the initial state, the right and left ends of the spring support 10 are locked in the hook-shaped portions 9a, while the upper and lower ends of the spring support 10 drop into the through holes 17 in order to be locked therein.

The shaft 12a of the pivot section 12 passes through the bearing 16a of the second installation body 6. In other words, the shaft 12a passes through the bearing (hole) 16a of the second installation body 6 in order to allow the pivot section 12 to be locked in a non-disengeable manner. On the inner periphery of the pivot section 12, a pair of protruding portions 4a is provided which make a protrusion/recess engagement with the recessed portions 5c of the cam engaging member 5.

The first installation body 3 is formed in a shape having a polygonal cross section which can be fitted into and connected to the connecting recessed portion 1a provided on the base of the overlapping section (the first member 1), and is formed so that it can be connected to the overlapping section in a non-rotatable manner.

Within the second installation body 6 and between the outer periphery of the cam engaging member 5 and the spring support 10, as described above, the counter-contraction spring 7 (a coil spring) is provided which biases the cam engaging member 5 in the engagement direction.

In the present embodiment, a pair of counter-contraction springs 7 having different diameters are provided within the second installation body 6 with the small-diameter spring covered with the large-diameter spring (in a twofold manner).

In the hinge device H of the present embodiment in accordance with the above-described configuration, therefore, when the cam 4 and the cam engaging member 5 are in the engaged state, the overlapping section (the first member 1) and the main body section (the second member 2) are pivotally locked in that engaged state. Along with the opening/closing pivoting of the overlapping section with respect to the main body section 2, the cam 4 and the cam engaging member 5 are disengaged, and a relative pivoting movement biasing force is generated which allows the cam 4 and the cam engaging member 5, which are not in the engaged state, to be engaged in a drop-in manner.

In other words, the hinge device H of the present embodiment allows the relative pivoting movement biasing force to function as a closing force which maintains the overlapped state of the overlapping section with respect to the main body section and to function as an opening force which maintains the full-open state of the overlapping section with respect to the main body section.

Since the present embodiment is configured as described above, the assembly of the parts is completed by the process of allowing the spring support 10 to be press fitted within the opening 8 of the second installation body 6, leading to good production workability and mass production.

In addition, since the second installation body 6 of the present embodiment is integrally molded from a synthetic resin made member, the guide surface for guiding the cam engaging member 5 is formed with high precision, thereby eliminating the need for a shaft which has been regarded as necessary, thus achieving shaftlessness. Therefore, in addition to a cost reduction owing to a reduced number of parts, a cost reduction owing to the elimination of formation of a conventional recessed portion for allowing the shaft to escape thereinto at the position for installing the hinge device can be achieved. In addition, the lack of shaft allows the above-described pair of counter-contraction springs 7 to be arranged without increasing the size of the second installation body 6, achieving a sufficient biasing force despite its compactness. The counter-contraction springs 7 may also be provided singly.

The present embodiment has, as the structure for allowing the spring support 10 to be press fitted within the opening 8 of the second installation body 6, the structure is made for allowing the spring support 10 to be press fitted by provision of the slits 9 in the opening 8 of the second installation body 6 and making the opening 8 expandable; however, it should be appreciated that the structure is not limited to the above-described embodiment, and may instead be a structure which makes the opening 8 of the second installation body 6 expandable by forming it from a member having suitable flexibility, or a structure which makes the spring support 10 shrinkable, thereby achieving the installation of the spring support 10 in a press-fitted manner.

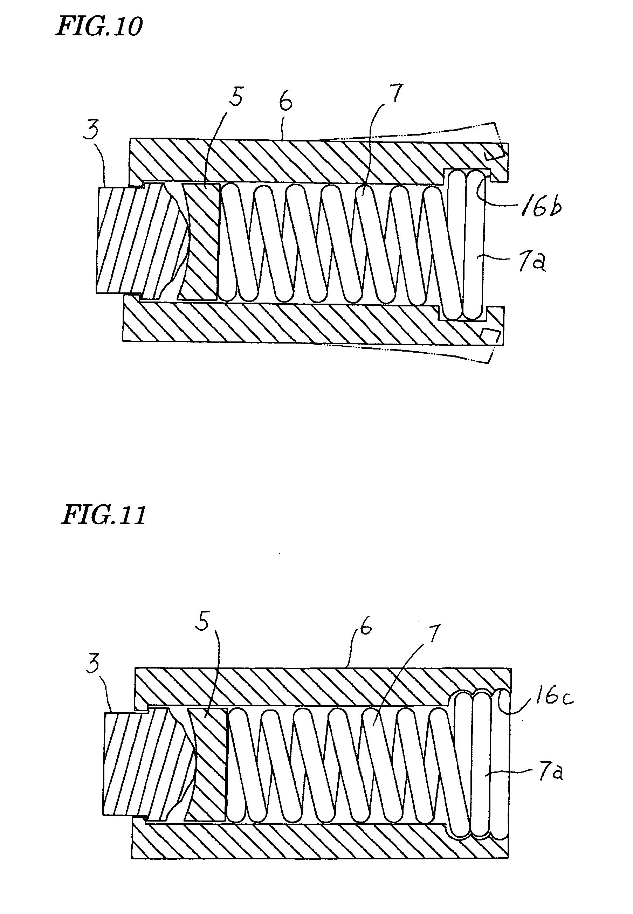

Fig. 10 shows another embodiment of the present invention, wherein in the above-described hinge device, a step 16b is formed at the rear of the opening 8, a rear portion 7a of the counter-contraction spring 7 is formed which is larger than the other portions of the counter-contraction spring 7, and the rear portion 7a of the counter-contraction spring 7 is engaged with the step 16b of the opening 8, thereby allowing the counter-contraction spring 7 to be locked in the opening 8 in a non-disengeable manner.

In other words, the counter-contraction spring 7 is engaged with the opening 8 in the non-disengeable manner by providing the step 16b in the opening 8 in place of the spring support 10 used in the previous embodiment and by forming the rear portion 7a of the counter-contraction spring 7 larger than the other portions of the counter-contraction spring 7.

When the counter-contraction spring 7 is installed by expanding the opening 8 and the expansion of the opening 8 is returned to the initial state, the step 16b of the opening 8 is fitted into the rear portion 7a of the counter-contraction spring 7 and is locked therein.

Fig. 11 shows another embodiment of the present invention, wherein in the above-described hinge device, the rear portion 7a of the counter-contraction spring 7 is formed larger than the other portions of the counter-contraction spring 7 as in the case of the previous embodiment, but in this embodiment, a female screw 16c which matches with the diameter of the rear portion 7a of the counter-contraction spring 7 is formed at the rear of the opening 8 of the second installation body 6, and the rear portion 7a of the counter-contraction spring 7 is threadably engaged with the female screw 16c of the opening 8, thereby allowing the counter-contraction spring 7 to be locked in the opening 8 in a non-disengeable manner.

In this embodiment, the rear portion 7a of the counter-contraction spring 7 is threadably engaged with the female screw 16c formed at the rear of the opening 8, thereby eliminating the expansion of the opening 8 in the previous embodiment. The second installation body 6 can therefore be made from a non-flexible member.

It should be appreciated by those skilled in the art that the present invention is not limited to the above-described embodiments, and the specific structure of each constituting element may be subjected to appropriate changes of design within the scope of the invention described herein.

### Industrial Applicability

The present invention is suitable for a hinge device for a small-sized apparatus such as a cellular phone, and a cellular phone or the like using such a hinge device.

## Claims

1. A hinge device installed between a first member 1 and a second member 2, which are folding opening/closing members, comprising:
a first installation body 3 which comprises a cam 4 and pivots together with said first member 1 in conjunction with said first member 1;
a tubular second installation body 6 which pivots together with said second member 2 in conjunction with said second member 2;
a cam engaging member 5 which is engaged with said cam 4 of said first installation body 3; and
a counter-contraction spring 7 which pressingly biases said cam engaging member 5 in the direction of said cam 4, wherein
said first installation body 3 is provided within said tubular second installation body 6 in a rotatable and slidable manner;
said second installation body 6 comprises an opening 8 having a slit 9 on the other end thereof, and the opening 8 is expandable by provision of said slit 9;
said cam engaging member 5 is provided within said second installation body 6 in a slidable and non-rotatable manner;
said first installation body 3, said cam engaging member 5, and
said counter-contraction spring 7 are installed within said second installation body 6; and
when said counter-contraction spring 7 is installed, under the condition that said expandable opening 8 is expanded from an initial diameter and said counter-contraction spring 7 is then installed, said counter-contraction spring 7 is locked in said opening 8 in a non-disengeable manner at the initial diameter position after returning from the expanded diameter.

2. The hinge device according to Claim 1, wherein a step 16b is formed at the rear of said opening 8, a rear portion 7a of said counter-contraction spring 7 is formed which is larger than the other portions of the counter-contraction spring 7, and said rear portion 7a of said counter-contraction spring 7 is engaged with said step 16b of said opening 8, thereby allowing said counter-contraction spring 7 to be locked in said opening 8 in a non-disengeable manner.

3. The hinge device according to Claim 1, wherein said opening 8 is expanded, a separate spring support 10 for supporting the rear of said counter-contraction spring 7 is installed, and said spring support 10 is engaged with said opening 8, thereby allowing said counter-contraction spring 7 to be locked in said opening 8 in a non
- disengeable manner.

4. The hinge device according to Claim 1, wherein a plurality of slits 9 are provided at opposing positions on the peripheral surface of said second installation body 6.

5. The hinge device according to Claim 1, wherein said cam engagement member 5 is provided with a protruding slide portion 5a, while a guide groove 13 is provided on the inner surface of said second installation body 6 for guiding said protruding slide portion 5a of said cam engaging member 5.

6. The hinge device according to Claim 1, wherein said second installation body 6 is formed from an appropriate synthetic resin made member.

7. A hinge device installed between a first member 1 and a second member 2, which are folding opening/closing members, comprising:
a first installation body 3 which comprises a cam 4 and pivots together with said first member 1 in conjunction with said first member 1;
a tubular second installation body 6 which pivots together with said second member 2 in conjunction with said second member 2;
a cam engaging member 5 which is engaged with said cam 4 of said first installation body 3; and
a counter-contraction spring 7 which pressingly biases said cam engaging member 5 in the direction of said cam 4, wherein
said first installation body 3 is provided within said tubular second installation body 6 in a rotatable and slidable manner;
said second installation body 6 is provided with an opening 8 on the other end thereof;
said cam engaging member 5 is provided within said second installation body 6 in a slidable and non-rotatable manner;
said first installation body 3, said cam engaging member 5, and
said counter-contraction spring 7 are installed within said second installation body 6; and
a rear portion 7a of said counter-contraction spring 7 is formed which is larger than the other portions of the counter-contraction spring 7, a female screw 16c which matches with the diameter of said rear portion 7a of said counter-contraction spring 7 is formed at the rear of said opening 8 of said second installation body 6, and said rear portion 7a of said counter-contraction spring 7 is threadably engaged with said female screw 16c of said opening 8, thereby allowing said counter-contraction spring 7 to be locked in said opening 8 in a non-disengeable manner.

8. An electronic apparatus which is configured by installing the hinge device described in Claim 1 or Claim 7 between a main body section of an apparatus in which a first member 1 of folding opening/closing members is provided with a control section 14 and an overlapping section in which a second member 2 of the folding opening/closing members is provided with a display section 15.
